# EUROPÄISCHE PATENTSCHRIFT

(11) **EP 3 894 128 B1**
(45) Veröffentlichungstag und Bekanntmachung des Hinweises auf die Patenterteilung: **17.04.2024**
(21) Anmeldenummer: 19801861.6
(22) Anmeldetag: 11.11.2019
(51) Int. Cl.: B23K 26/38, B23K 26/08, B23K 37/02, B23K 101/06, B23K 101/28

(54) **ROHRBEARBEITUNGSMASCHINE ZUM SCHNEIDEN VON ROHREN ODER PROFILEN MITTELS EINES LASERSTRAHLS**
PIPE PROCESSING MACHINE FOR CUTTING PIPES OR PROFILES BY LASER BEAM
MACHINE DE TRAITEMENT DE TUYAUX POUR COUPER DES TUYAUX OU DES PROFILS PAR FAISCEAU LASER

(30) Priorität: 11.12.2018 DE 102018131781
(43) Veröffentlichungstag der Anmeldung: 20.10.2021
(73) Patentinhaber: TRUMPF Werkzeugmaschinen SE + Co. KG, 71254 Ditzingen (DE)
(72) Erfinder: RUETZ, Karsten, 71640 Ludwigsburg (DE); JARSCH, Florian, 71254 Ditzingen (DE); MATT, Philipp, 71701 Schwieberdingen (DE)
(74) Vertreter: Trumpf Patentabteilung
(86) Internationale Anmeldenummer: PCT/EP2019/080822
(87) Internationale Veröffentlichungsnummer: WO 2020/120047

(56) Entgegenhaltungen:
- EP-A1- 3 233 366
- EP-B1- 3 233 366
- CN-A- 107 309 547
- CN-U- 206 764 145
- CN-U- 207 255 495
- US-B2- 6 825 439

## Beschreibung

Die Erfindung betrifft eine Rohrbearbeitungsmaschine zum Schneiden von Rohren oder Profilen mittels eines Laserstrahls, mit einem Maschinenbett, an dem eine Vorschubstation zum Vorschieben von zu bearbeitenden Rohren oder Profilen entlang einer X-Achse vorgesehen ist. Die Rohrbearbeitungsmaschine weist ferner ein Durchschiebefutter auf, durch welches das Rohr oder Profil hin zu einem Schneidkopf hindurchgeschoben wird. Der Schneidkopf ist dabei entlang einer senkrecht zur X-Achse verlaufenden Y-Achse, die in der Regel horizontal verläuft, und entlang einer senkrecht zur Y-Achse verlaufenden Z-Achse, die in der Regel vertikal verläuft, verfahrbar angeordnet.

Eine derartige Rohrbearbeitungsmaschine ist beispielsweise aus der DE 10 2016 106 067 A1, der EP 2 017 023 B1 oder der WO 2016/098069 A1 bekannt. CN 206 764 145 U, CN 107 309 547 A und CN 207 255 495 U offenbaren ebenfalls derartige Rohrbearbeitungsmaschinen. EP 3 233 366 A1, welche die Basis für den Oberbegriff des Anspruchs 1 bildet, offenbart eine Rohrbearbeitungsmaschine, bei welcher der Schneidkopf an einem Achsträger befestigt und oberhalb eines Durchschiebefutters angeordnet ist.

### Bei derartigen

Rohrbearbeitungsmaschinen ist eine vom Maschinenbett getrennt ausgebildete Bearbeitungsstation vorgesehen, an welcher der Schneidkopf entlang der Y-Achse und der Z-Achse verfahrbar angeordnet ist. Die bekannten Maschinen weisen folglich zwei Baugruppen auf: zum einen das Maschinenbett mit der Vorschubstation und mit dem Durchschiebefutter und zum anderen die Bearbeitungsstation mit dem Schneidkopf und den Führungen zur Führung des Schneidkopfs entlang den Achsen. Die getrennte Ausbildung hat den Vorteil, dass die Baugruppen separat voneinander hergestellt und transportiert werden können. Allerdings hat es sich in der Praxis gezeigt, dass die Maschineneinrichtung vergleichsweise aufwändig ist, da die beiden Baugruppen exakt zueinander auszurichten sind, um letztlich ein präzises Schneiden des Rohres oder Profils zu gewährleisten. Ferner können sich Nachteile im Hinblick auf die Maschinendynamik ergeben, da ein Schwingen des Maschinenbetts gegenüber der weitgehend stillstehenden Bearbeitungsstation auftreten kann, wodurch sich Bearbeitungsungenauigkeiten ergeben können.

Der vorliegenden Erfindung liegt die Aufgabe zugrunde, eine Rohrbearbeitungsmaschine der eingangs genannten Art bereitzustellen, die den genannten Nachteilen Abhilfe leistet. Diese Aufgabe wird gelöst durch eine Rohrbearbeitungsmaschine mit den Merkmalen des Patentanspruchs 1.

Erfindungsgemäß ist folglich vorgesehen, dass am Maschinenbett ein Achsträger angeordnet ist, an dem der Schneidkopf verfahrbar gelagert und an dem das Durchschiebefutter angeordnet sind. Dadurch, dass zum einen der Schneidkopf verfahrbar am Achsträger vorgesehen ist, und dass zum anderen auch das Durchschiebefutter am Achsträger angeordnet ist, kann eine Maschine realisiert werden, bei der die einzelnen Funktionskomponenten dauerhaft exakt zueinander ausgerichtet sind. Ein aufwändiges Einrichten der Maschine bei deren Montage entfällt. Der mit dem Maschinenbett ausgebildete Achsträger wird kann mit dem Maschinenbett derart gefertigt, dass sich eine exakte Positionierung der einzelnen Bauteile zueinander ergibt.

Das Maschinenbett ist mit dem Achsträger einstückig ausgebildet, wobei das Maschinenbett mit dem Achsträger unlösbar verbunden sein kann.

Vorteilhafterweise sind dabei das Maschinenbett und der Achsträger mittels Schweißen gefügt. Eine insbesondere spanende Bearbeitung des Maschinenbetts samt Achsträger erfolgt nach dem Fügen vorzugsweise innerhalb einer einzigen Aufspannung. Dadurch kann gewährleistet werden, dass die beiden Bauteile, das Maschinenbett und der Achsträger gemeinsam nach dem Fügen bearbeitet werden, so dass eine exakte Ausrichtung dauerhaft erhalten bleibt.

Allerdings ist auch denkbar, dass das Maschinenbett und der Achsträger durch Schrauben miteinander gefügt sind.

Um eine mögliche Torsion des Achsträgers um die X-Achse zu vermeiden ist es vorteilhaft, wenn der Achsträger in Y-Richtung, also in horizontaler Richtung, eine größere Ausdehnung als das Maschinenbett aufweist. Dadurch ergibt sich eine größere Aufstandsfläche und deshalb eine höhere Torsionssteifigkeit, wodurch sich insgesamt eine robuste Ausbildung der Maschine ergibt.

Ferner ist vorteilhaft, wenn das Durchschiebefutter in der Richtung der X-Achse unverfahrbar und fest am Achsträger angeordnet ist. Auch dies trägt zu einer dauerhaften positionsgenauen Ausrichtung der Teile bei. Zudem kann eine höhere Genauigkeit beim Laserschneiden erzielt werden, da der Tool Center Point (TCP) bei der Bearbeitung dann einen konstanten Abstand zum Durchschiebefutter aufweist. Der Abstand kann dabei vergleichsweise klein sein, so dass störende Schwingungen an der Maschine und/oder am zu bearbeitenden Rohr oder Profil minimiert werden können. Da der Schneidkopf und das Durchschiebefutter in der gleichen Baugruppe realisiert sind, können unerwünschte Schwingungen zwischen vom Durchschiebefutter geführten Rohr oder Profil und dem Schneidkopf weitgehend unterbunden werden.

Bei einer weiteren Ausbildung der Erfindung ist vorgesehen, dass am Achsträger eine Y-Führung mit einem entlang der Y-Führung verfahrbaren Schlitten zur Verfahrbarkeit des Schneidkopfes entlang der Y-Achse vorgesehen ist. Ferner ist am Y-Schlitten eine Z-Führung mit einem entlang der Z-Führung verfahrbaren Schlitten zur Verfahrbarkeit des Schneidkopfes entlang der Z-Achse vorgesehen. Der Schneidkopf ist dann am Z-Schlitten angeordnet. Mit der beschriebenen Anordnung kann auf vergleichsweise einfache Art und Weise der Schneidkopf entlang der Y-Achse und unabhängig davon entlang der Z-Achse verfahren werden.

Bei einer anderen Ausführungsform der Erfindung ist vorgesehen, dass der Schneidkopf entlang einer Zusatz-X-Achse verfahrbar ist. Durch diese Ausbildung kann der Schneidkopf zusätzlich entlang der Zusatz-X-Achse verfahren werden, wodurch ein größerer Freiraum zwischen dem Schneidkopf und dem Durchschiebefutter entsteht. Dies erlaubt trotz feststehendem Durchschiebefutter das Schneiden langer Konturen und verringert eine Kollisionsgefahr.

Gemäß der Erfindung kann ferner vorgesehen sein, dass der Achsträger eine Y-Führung mit einem entlang der Y-Führung verfahrbaren Y-Schlitten zur Verfahrbarkeit des Schneidkopfes entlang der Y-Achse aufweist und dass am Y-Schlitten eine Zusatz-X-Führung mit einem entlang der Zusatz-X-Führung verfahrbaren Zusatz-X-Schlitten zur Verfahrbarkeit des Schneidkopfes entlang der Zusatz-X-Achse vorgesehen ist. Bei dieser Ausbildung ist dann am Zusatz-X-Schlitten eine Z-Führung mit einem entlang der Z-Führung verfahrbaren Z-Schlitten zur Verfahrbarkeit des Schneidkopfes entlang der Z-Achse vorgesehen, wobei der Schneidkopf dann am Z-Schlitten angeordnet ist.

Vorzugsweise ist ferner vorgesehen, dass der Schneidkopf um die Y-Achse entlang einer B-Achse verschwenkbar angeordnet ist. Dann, wenn der Schneidkopf am Z-Schlitten vorgesehen ist, kann folglich am Z-Schlitten eine Schwenkführung zum Verschwenken des Schneidkopfs um die Y-Achse entlang einer B-Achse vorgesehen sein.

In der entfernteren Position des Schneidkopfs vom Durchschiebefutter kann der Schneidkopf um die B-Achse zum Durchschiebefutter oder von diesem weg geschwenkt werden, ohne mit dem Durchschiebefutter zu kollidieren. Hierdurch können insbesondere Schrägschnitte, d.h. Laserschnitte, die nicht senkrecht zur Rohroberfläche stehen, realisiert werden.

In heutigen Rohrschneidmaschinen wird zum Schrägschnitt das Durchschiebefutter entlang der X-Richtung vom Schneidkopf weggefahren, um die Rotation des Schneidkopfes zu ermöglichen. Die B-Achse bleibt dabei in X-Richtung ortsfest. Bei der Rotation des Schneidkopfs entstehen dabei unterschiedliche Abstände zwischen TCP und Durchschiebefutter. Dies führt zu Genauigkeitsverlusten.

Bei einer erfindungsgemäßen Ausführungsform mit Zusatz-X-Achse kann diese dazu genutzt werden, den TCP bei Schrägschnitt immer in konstantem Abstand zum Durchschiebefutter zu halten, in dem die Zusatz-X-Achse Ausgleichsbewegungen zur B-Achse durchführt. Dies bringt Vorteile in der Genauigkeit der Schrägschnittbearbeitung.

In einer weiteren Ausführung kann die Zusatz-X-Achse auch als hochdynamische Achse ausgeführt und mit der X-Achse überlagert werden. Dadurch können Produktivitätsvorteile bei der Fertigung kleiner Konturen erzeugen, da die Zusatz-X-Achse wesentlich dynamischer als die das Rohr bewegende X-Achse ausgebildet sein kann.

In einer alternativen Ausführung können anstatt der oben beschriebenen Reihenfolge der Achsen Y-Achse, Zusatz-X-Achse, Z-Achse, B-Achse folgende Achsreihenfolgen vorgesehen sein: Zusatz-X Achse, Y-Achse, Z-Achse, B Achse; oder Y-Achse, Z-Achse, Zusatz-X-Achse, B Achse.

Dadurch, dass das Maschinenbett dauerhaft mit dem Achsträger positionsgenau zueinander angeordnet ist, ist es vorteilhaft, wenn am Achsträger Schnittstellen zur Anordnung weiterer Funktionsbauteile vorgesehen sind. Derartige Bauteile können insbesondere Kameras, Sensoren, Gerätebleche, Schutzhauben, Bedienpulte, Nahtlageerkennungseinrichtungen und/oder Nahtlageregelungseinrichtungen sein.

Weitere vorteilhafte Ausgestaltungen und Einzelheiten der Erfindung sind der nachfolgenden Beschreibung zu entnehmen, anhand derer zwei Ausführungsformen der Erfindung näher beschrieben und erläutert sind.

### Es zeigen:

- Figur 1: eine erfindungsgemäße Rohrbearbeitungsmaschine in Seitenansicht;
- Figur 2: die Maschine gemäß Figur 1 in Vorderansicht;
- Figur 3: einen Ausschnitt der Maschine gemäß Figur 1 in isometrischer Ansicht;
- Figur 4: die Vorderansicht einer zweiten erfindungsgemäßen Maschine; und
- Figur 5: einen Ausschnitt der Maschine gemäß Figur 4 in isometrischer Ansicht.

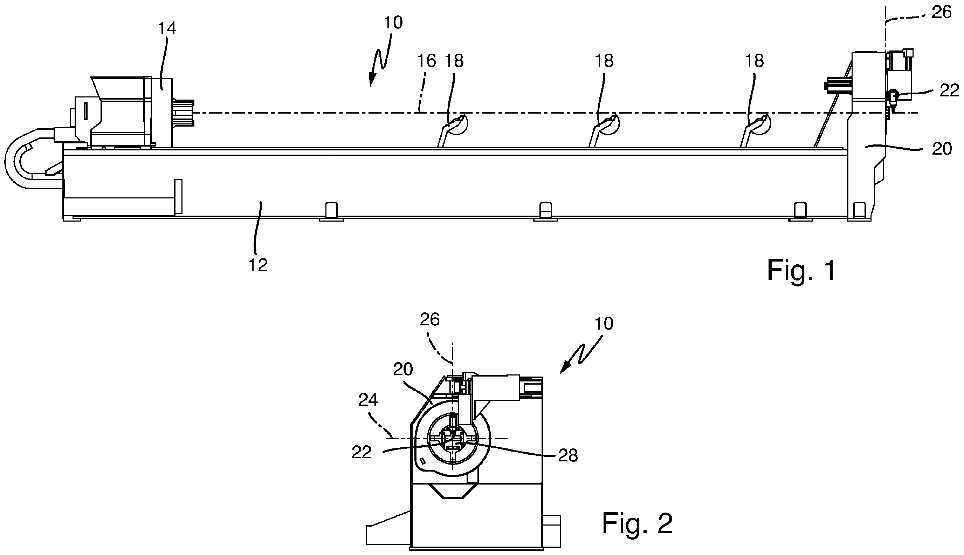

In den Figuren 1 bis 3 ist eine Rohrbearbeitungsmaschine 10 zum Schneiden von Rohren oder Profilen mittels eines Laserstrahls gezeigt. Die Maschine 10 umfasst ein Maschinenbett 12, an dem eine Vorschubstation 14 zum Vorschieben von zu bearbeitenden Rohren oder Profilen entlang einer X-Achse 16 vorgesehen ist. Zur Auflage von in den Figuren nicht dargestellten Rohren oder Profilen sind Werkstückabstützungen 18 am Maschinenbett 12 vorgesehen.

An der Vorderseite der Maschine 10 ist am freien Ende des Maschinenbetts 12 ein Achsträger 20 vorgesehen, der einstückig und insbesondere unlösbar mit dem Maschinenbett 12 verbunden ist. Vorzugsweise ist der Achsträger 20 an das Maschinenbett 12 angeschweißt. Eine Bearbeitung des Maschinenbetts 12 und des Achsträgers 20 erfolgt dabei vorzugsweise nach dem Fügen von Maschinenbett 12 und Achsträger 20. Hierdurch kann ein dauerhaftes und positionsgenaues Zueinanderanordnen der Bauteile und deren Funktionsabschnitte erreicht werden.

Gemäß der Erfindung ist allerdings auch denkbar, dass das Maschinenbett mit dem Achsträger lösbar miteinander gefügt sind, beispielsweise durch Verschraubung.

Am Achsträger 20 ist ein Schneidkopf 22 vorgesehen, der entlang einer senkrecht zur X-Achse 16 und in horizontaler Richtung verlaufenden Y-Achse 24 sowie einer senkrecht zur X-Achse, in vertikaler Richtung verlaufenden Z-Achse 26 verfahrbar angeordnet ist. Der Achsträger 20 weist ferner ein Durchschiebefutter 28 auf, durch welches das zu bearbeitende Rohr oder Profil durch den Achsträger 20 hindurchgeführt und mittels welchem das Rohr oder Profil während der Bearbeitung gespannt werden kann. Das Durchschiebefutter 28 ist in Richtung der X-Achse fest und unverfahrbar am Achsträger 20 angeordnet.

Zur Bereitstellung eines aus dem Schneidkopf 22 austretenden Laserstrahls mittels dem das zu bearbeitende Rohr oder Profil geschnitten wird, ist ein in den Figuren nicht dargestellter Lasererzeuger vorgesehen, dessen erzeugter Laserstrahl über ebenfalls im Einzelnen nicht dargestellte Umlenkmittel hin zum Schneidkopf 22 umgelenkt wird.

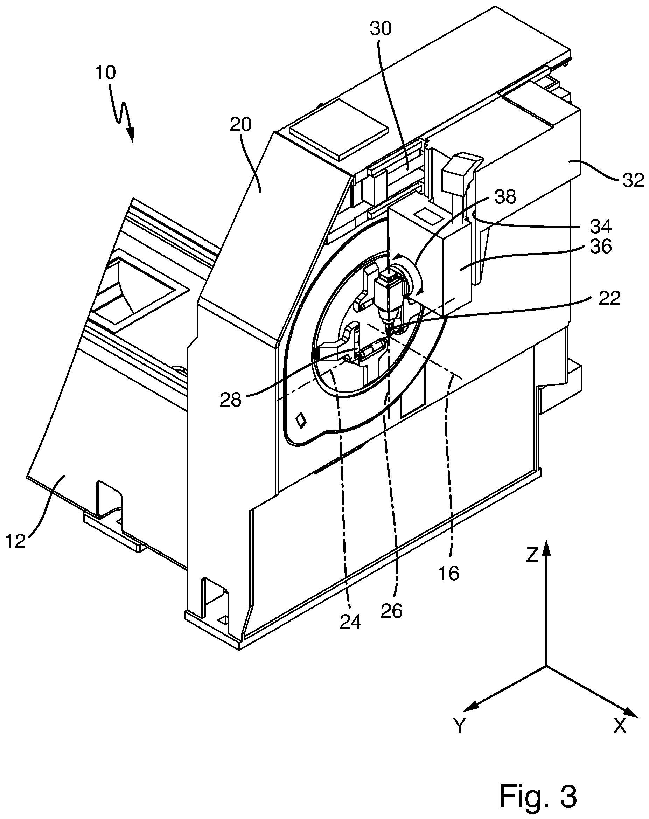

Wie insbesondere aus Figur 3 deutlich wird, weist der Achsträger 20 in Richtung der Y-Achse 24 eine größere Ausdehnung als das Maschinenbett 12 auf. Hierdurch ergibt sich eine stabile und robuste Anordnung. Insbesondere kann eine Torsion um die X-Achse 16 sicher unterbunden werden.

Wie weiter insbesondere aus Figur 3 deutlich wird, ist am Achsträger eine Y-Führung 30 vorgesehen, in der ein Y-Schlitten 32 in Richtung der Y-Achse 24 verfahrbar ist. Der Y-Schlitten 32 sieht dabei eine Z-Führung 34 vor, entlang derer ein Z-Schlitten 36 verfahrbar angeordnet ist. Am Z-Schlitten 36 ist letztlich der Schneidkopf 22 angeordnet, wobei dieser um die Y-Achse 24 entlang einer B-Achse, die durch den Pfeil 38 angedeutet ist, verdrehbar ist.

Die Ansteuerung des Schneidkopfs 22 entlang der Y-Achse 24, der Z-Achse 26 und der B-Achse 38 erfolgt dabei über eine Maschinensteuerung, die entsprechend angeordnete und eingerichtete Antriebseinheiten zur Verlagerung des Schneidkopfs 22 ansteuert. Die Maschinensteuerung kann dabei in einem Schaltschrank vorgesehen sein, der einstückig mit dem Maschinenbett 12 ausgebildet und insbesondere unlösbar mit dem Maschinenbett 12 verbunden ist. Der Schaltschrank kann insbesondere an das Maschinenbett 12 angeschweißt sein.

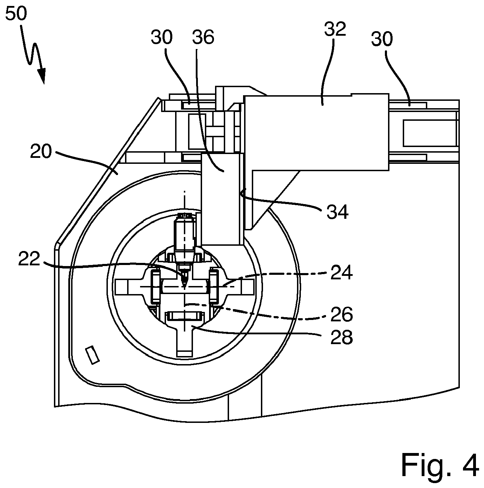

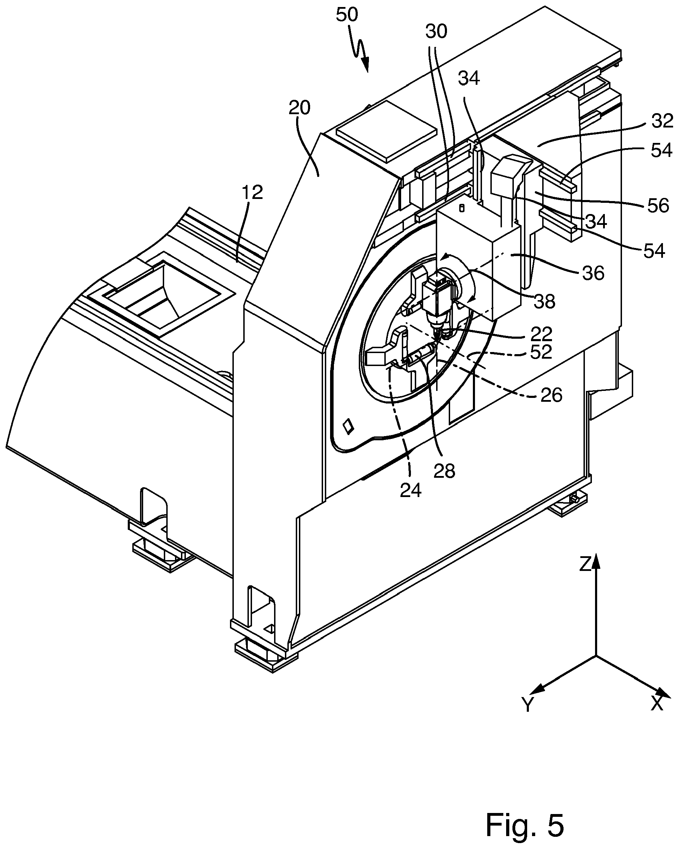

In den Figuren 4 und 5 ist eine weitere erfindungsgemäße Rohrbearbeitungsmaschine 50 gezeigt, deren Aufbau im Wesentlichen dem Aufbau der Rohrbearbeitungsmaschine 10 entspricht. Entsprechende Bauteile sind mit entsprechenden Bezugszeichen versehen.

Im Unterschied zur Rohrbearbeitungsmaschine 10 kann bei der Rohrbearbeitungsmaschine 50 der Schneidkopf 22 zusätzlich entlang einer Zusatz-X-Achse 52 verfahren werden. Dazu ist am Y-Schlitten 32 eine Zusatz-X-Führung 54 vorgesehen, entlang der ein Zusatz-X-Schlitten 56 verfahrbar ist. Der Schlitten 56 weist dann die Z-Führung 34 auf, entlang derer der Z-Schlitten 36 verfahren werden kann. Entsprechend der Rohrbearbeitungsmaschine 10 ist auch bei der Rohrbearbeitungsmaschine 50 der Schneidkopf am Z-Schlitten 36 um die Y-Achse 24 entlang der B-Achse 38 verschwenkbar.

Bei der Maschine 50 sind, wie bei der Maschine 10, CNCgesteuerte Antriebe vorgesehen, mit denen der Schneidkopf 22 letztlich entlang der Y-Achse 24, der Z-Achse 26, der Zusatz-X-Achse 52 und der B-Achse 38 verfahrbar ist.

## Patentansprüche

1. Rohrbearbeitungsmaschine (10, 50) zum Schneiden von Rohren oder Profilen mittels eines Laserstrahls, mit einem Maschinenbett (12), an dem eine Vorschubstation (14) zum Vorschieben von zu bearbeitenden Rohren oder Profilen entlang einer X-Achse (16) vorgesehen ist, mit einem Durchschiebefutter (28), durch welches das Rohr oder Profil hin zu einem Schneidkopf (22) hindurchgeschoben wird, wobei der Schneidkopf entlang einer senkrecht zur X-Achse (16) verlaufenden Y-Achse (24) und entlang einer senkrecht zur Y-Achse (24) verlaufenden Z-Achse (26) verfahrbar angeordnet ist, **dadurch gekennzeichnet, dass** am Maschinenbett (12) ein Achsträger (20) angeordnet ist, an dem der Schneidkopf (22) verfahrbar gelagert und an dem das Durchschiebefutter (28) angeordnet sind, wobei das Maschinenbett (12) mit dem Achsträger (20) einstückig ausgebildet ist.

2. Rohrbearbeitungsmaschine (10, 50) nach Anspruch 1, **dadurch gekennzeichnet, dass** das Maschinenbett (12) mit dem Achsträger (20) unlösbar verbunden ist.

3. Rohrbearbeitungsmaschine (10, 50) nach einem der vorhergehenden Ansprüche, **dadurch gekennzeichnet, dass** das Maschinenbett (12) und der Achsträger (20) mittels Schweißen oder mittels Schrauben gefügt sind.

4. Rohrbearbeitungsmaschine (10, 50) nach einem der vorhergehenden Ansprüche, **dadurch gekennzeichnet, dass** das der Achsträger (20) in Y-Richtung (24) eine größere Ausdehnung als das Maschinenbett (12) aufweist.

5. Rohrbearbeitungsmaschine (10, 50) nach einem der vorhergehenden Ansprüche, **dadurch gekennzeichnet, dass** das Durchschiebefutter (28) in Richtung der X-Achse (16) unverfahrbar am Achsträger (20) angeordnet ist.

6. Rohrbearbeitungsmaschine (10) nach einem der vorhergehenden Ansprüche, **dadurch gekennzeichnet, dass** am Achsträger (20) eine Y-Führung (30) mit einem entlang der Y-Führung (30) verfahrbaren Y-Schlitten (32) zur Verfahrbarkeit des Schneidkopfes (22) entlang der Y-Achse (24) vorgesehen ist, dass am Y-Schlitten (32) eine Z-Führung (34) mit einem entlang der Z-Führung (34) verfahrbaren Z-Schlitten (36) zur Verfahrbarkeit des Schneidkopfes (22) entlang der Z-Achse (26) vorgesehen ist, wobei der Schneidkopf (22) am Z-Schlitten (36) angeordnet ist.

7. Rohrbearbeitungsmaschine (10, 50) nach einem der Ansprüche 1 bis 5, **dadurch gekennzeichnet, dass** der Schneidkopf (22) entlang einer Zusatz-X-Achse (52) verfahrbar ist.

8. Rohrbearbeitungsmaschine (10, 50) nach Anspruch 7, **dadurch gekennzeichnet, dass** die Zusatz-X-Achse (52) derart eingerichtet ist, dass der Schneidkopf bzw. der Tool Center Point (TCP) bei Schrägschnitt in konstantem Abstand zum Durchschiebefutter (28) gehalten wird.

9. Rohrbearbeitungsmaschine (10, 50) nach Anspruch 7 oder 8, **dadurch gekennzeichnet, dass** die Zusatz-X-Achse (52) als hochdynamische Achse zur Überlagerung der Bewegung der mit X-Achse (16) eingerichtet ist.

10. Rohrbearbeitungsmaschine (50) nach Anspruch 7, 8 oder 9, **dadurch gekennzeichnet, dass** der Achsträger (20) eine Y-Führung (30) mit einem entlang der Y-Führung (30) verfahrbaren Y-Schlitten (32) zur Verfahrbarkeit des Schneidkopfes (22) entlang der Y-Achse (24) aufweist, dass am Y-Schlitten (32) eine Zusatz-X-Führung (54) mit einem entlang der Zusatz-X-Führung (54) verfahrbaren Zusatz-X-Schlitten (56) zur Verfahrbarkeit des Schneidkopfes (22) entlang der Zusatz-X-Achse (52) vorgesehen ist, dass am Zusatz-X-Schlitten (56) eine Z-Führung (34) mit einem entlang der Z-Führung (34) verfahrbaren Z-Schlitten (36) zur Verfahrbarkeit des Schneidkopfes (22) entlang der Z-Achse (26) vorgesehen ist, wobei der Schneidkopf (22) am Z-Schlitten (36) angeordnet ist.

11. Rohrbearbeitungsmaschine (10, 50) nach einem der vorhergehenden Ansprüche, **dadurch gekennzeichnet, dass** das der Schneidkopf (22) um die Y-Achse (24) verschwenkbar (B-Achse) angeordnet ist.

12. Rohrbearbeitungsmaschine (10, 50) nach einem der vorhergehenden Ansprüche, **dadurch gekennzeichnet, dass** der Achsträger (20) weitere Schnittstellen zur Anordnung weiterer Funktionsbauteile aufweist.

13. Rohrbearbeitungsmaschine (10, 50) nach einem der vorhergehenden Ansprüche, **dadurch gekennzeichnet, dass** ein Schaltschrank vorgesehen ist, der einstückig mit dem Maschinenbett (12) ausgebildet ist.

## Claims

1. A pipe processing machine (10, 50) for cutting pipes or profiles using a laser beam, comprising a machine bed (12), a feed station (14) provided on the machine bed for feeding pipes or profiles to be processed along an X-axis (16), a push-through chuck (28) through which the pipe or profile is pushed to a cutting head (22), the cutting head being arranged movably along a Y-axis (24) running perpendicular to the X-axis (16) and along a Z-axis (26) running perpendicular to the Y-axis (24), **characterized in that** an axis support (20) is arranged on the machine bed (12), on said axis support the cutting head (22) is movably mounted and the push-through chuck (28) is arranged, wherein the machine bed (12) is formed in one piece with the axis support (20).

2. The pipe processing machine (10, 50) according to claim 1, **characterized in that** the machine bed (12) is non-detachably connected to the axis support (20).

3. The pipe processing machine (10, 50) according to one of the preceding claims, **characterized in that** the machine bed (12) and the axis support (20) are joined together by welding or by screws.

4. The pipe processing machine (10, 50) according to one of the preceding claims, **characterized in that** the axis support (20) has a greater extent than the machine bed (12) in the Y direction (24).

5. The pipe processing machine (10, 50) according to one of the preceding claims, **characterized in that** the push-through chuck (28) is arranged on the axis support (20) immovably in the direction of the X-axis (16).

6. The pipe processing machine (10) according to one of the preceding claims, **characterized in that** a Y-guide (30) is provided on the axis support (20), the Y-guide having a Y-slide (32) which can move along the Y-guide (30) for moving the cutting head (22) along the Y-axis (24), that a Z-guide (34) is provided on the Y-slide (32), the Z-guide having a Z-slide (36) which can move along the Z-guide (34) for moving the cutting head (22) along the Z-axis (26), wherein the cutting head (22) is arranged on the Z-slide (36).

7. The pipe processing machine (10, 50) according to one of claims 1 to 5, **characterized in that** the cutting head (22) is movable along an additional X-axis (52).

8. The pipe processing machine (10, 50) according to claim 7, **characterized in that** the additional X-axis (52) is configured such that the cutting head or the tool center point (TCP) is held at a constant distance from the push-through chuck (28) during an oblique cut.

9. The pipe processing machine (10, 50) according to claim 7 or 8, **characterized in that** the additional X-axis (52) is configured as a highly dynamic axis for superimposing movement with the X-axis (16).

10. The pipe processing machine (50) according to claim 7, 8 or 9, **characterized in that** the axis support (20) comprises a Y-guide (30) with a Y-slide (32) which can move along the Y-guide (30) for moving the cutting head (22) along the Y-axis (24), that an additional X-guide (54) is provided on the Y-slide (32), the additional X-guide having an additional X-slide (56) which can move along the additional X-guide (54) for moving the cutting head (22) along the additional X-axis (52), that a Z-guide (34) is provided on the additional X-slide (56), the Z-guide having a Z-slide (36) which can move along the Z-guide (34) for moving the cutting head (22) along the Z-axis (26), wherein the cutting head (22) is arranged on the Z-slide (36).

11. The pipe processing machine (10, 50) according to one of the preceding claims, **characterized in that** the cutting head (22) is arranged pivotably about the Y-axis (24) (B-axis).

12. The pipe processing machine (10, 50) according to one of the preceding claims, **characterized in that** the axis support (20) comprises further interfaces for arranging further functional components.

13. The pipe processing machine (10, 50) according to one of the preceding claims, **characterized in that** a switch cabinet is provided which is formed in one piece with the machine bed (12).

## Revendications

1. Machine de traitement de tuyaux (10, 50) destinée à couper des tuyaux ou des profilés à l'aide d'un faisceau laser, avec un bâti de machine (12) sur lequel est pourvue une station d'alimentation (14) destinée à alimenter des tuyaux ou des profilés à traiter selon un axe X (16), avec un mandrin de passage (28) à travers lequel le tuyau ou le profilé est poussé jusqu'à une tête de coupe (22), dans lequel la tête de coupe est agencée de manière à pouvoir être déplacée le long d'un axe Y (24) perpendiculaire à l'axe X (16) et le long d'un axe Z (26) perpendiculaire à l'axe Y (24), **caractérisée en ce qu'**un support d'axe (20) est agencé sur le bâti de machine (12), sur lequel la tête de coupe (22) est montée de manière à pouvoir être déplacée et sur lequel est agencé le mandrin de passage (28), dans lequel le bâti de machine (12) est formé d'une seule pièce avec le support d'axe (20).

2. Machine de traitement de tuyaux (10, 50) selon la revendication 1, **caractérisée en ce que** le bâti de machine (12) est relié en permanence au support d'axe (20).

3. Machine de traitement de tuyaux (10, 50) selon l'une des revendications précédentes, **caractérisée en ce que** le bâti de machine (12) et le support d'axe (20) sont reliés par soudage ou par des vis.

4. Machine de traitement de tuyaux (10, 50) selon l'une des revendications précédentes, **caractérisée en ce que** le support d'axe (20) présente une plus grande extension dans la direction Y (24) que le bâti de machine (12).

5. Machine de traitement de tuyaux (10, 50) selon l'une des revendications précédentes, **caractérisée en ce que** le mandrin de passage (28) est agencé sur le support d'axe (20) de manière à ne pas pouvoir être déplacé en direction de l'axe X (16).

6. Machine de traitement de tuyaux (10) selon l'une des revendications précédentes, **caractérisée en ce qu'**un guide Y (30) sur le support d'axe (20) est pourvu d'un chariot Y (32) qui peut être déplacé le long du guide Y (30) afin de permettre le déplacement de la tête de coupe (22) le long de l'axe Y (24), **en ce qu'**un guide Z (34) sur le chariot Y (32) est pourvu d'un chariot Z (36) qui peut être déplacé le long du guide Z (34) pour permettre le déplacement de la tête de coupe (22) le long de l'axe Z (26), dans lequel la tête de coupe (22) est agencée sur le chariot Z (36).

7. Machine de traitement de tuyaux (10, 50) selon l'une des revendications 1 à 5, **caractérisée en ce que** la tête de coupe (22) peut être déplacée le long d'un axe X additionnel (52).

8. Machine de traitement de tuyaux (10, 50) selon la revendication 7, **caractérisée en ce que** l'axe X additionnel (52) est configuré de telle sorte que la tête de coupe ou le point central de l'outil (TCP - Tool Center Point) soit maintenu à une distance constante du mandrin de passage (28) pendant la coupe en diagonale.

9. Machine de traitement de tuyaux (10, 50) selon la revendication 7 ou 8, **caractérisée en ce que** l'axe X additionnel (52) est configuré comme axe hautement dynamique pour une superposition du mouvement avec l'axe X (16).

10. Machine de traitement de tuyaux (50) selon la revendication 7, 8 ou 9, **caractérisée en ce que** le support d'axe (20) comporte un guide Y (30) avec un chariot Y (32) qui peut être déplacé le long du guide Y (30) afin de permettre le déplacement de la tête de coupe (22) le long de l'axe Y (24), **en ce qu'**un guide X additionnel (54) sur le chariot Y (32) est pourvu d'un chariot X additionnel (56) qui peut être déplacé le long du guide X additionnel (54) afin de permettre le déplacement de la tête de coupe (22) le long de l'axe X additionnel (52), **en ce qu'**un guide Z (34) sur le chariot X additionnel (56) est pourvu d'un chariot Z (36) qui peut être déplacé le long du guide Z (34) afin de permettre le déplacement de la tête de coupe (22) le long de l'axe Z (26), dans lequel la tête de coupe (22) est agencée sur le chariot Z (36).

11. Machine de traitement de tuyaux (10, 50) selon l'une des revendications précédentes, **caractérisée en ce que** la tête de coupe (22) est agencée de manière à pouvoir pivoter (axe B) autour de l'axe Y (24).

12. Machine de traitement de tuyaux (10, 50) selon l'une des revendications précédentes, **caractérisée en ce que** le support d'axe (20) présente d'autres interfaces afin de disposer d'autres composants fonctionnels.

13. Machine de traitement de tuyaux (10, 50) selon l'une des revendications précédentes, **caractérisée en ce qu'**une armoire de commande constituée d'une seule pièce avec le bâti de machine (12) est pourvue.
